# EUROPEAN PATENT APPLICATION

(11) **EP 2 613 248 A2**
(43) Date of publication of application: **10.07.2013**
(21) Application number: 13000097.9
(22) Date of filing: 09.01.2013
(51) Int. Cl.: G06F 3/0488

(54) **Electronic device and method of controlling the same**

(30) Priority: 09.01.2012 KR 20120002560
(71) Applicant: LG Electronics, Inc., Seoul, 150-721 (KR)
(72) Inventor: Choi, Kyungdong, 153-801 Seoul (KR)
(74) Representative: Thum, Bernhard

(57) **Abstract**

The present invention relates to an electronic device and a method of controlling the same. The present invention provides an electronic device and a method of controlling the same for providing a new interface for directly accessing a specific item. A shortcut interface for accessing a specific item can be provided to a desired position of a user only using simple and various touch operations.

## Description

### Cross-reference to related applications

This application claims the benefit of earlier filing date and right of priority to Korean Patent Application No.10-2012-0002560, filed on 09 January, 2012, the contents of which are incorporated by reference herein in their entirety.

### Technical field

The present invention relates to an electronic device, and more particularly, to an electronic device and a method of controlling the same to provide a new shortcut interface for directly accessing a specific item.

### Discussion of the related art

With the remarkable development of hardware technology and software technology related to various electronic devices including a mobile terminal, electronic devices can provide or store a variety of functions and information. Accordingly, screens of the electronic devices provide various types of information.

In the case of an electronic device including a touch screen, it is possible to access various types of information provided through the touch screen only using user touch.

The electronic device including a touch screen requires constant development of a new user interface for improving user convenience in access of information provided through the touch screen and execution of functions.

### Summary

An object of the present invention is to provide an electronic device and a method of controlling the same to provide a new shortcut interface for directly accessing a specific item.

According to a first aspect of the present invention, an electronic device includes: a touch screen configured to display a plurality of items; and a controller configured to provide a shortcut interface for accessing a specific item from among the plurality of items to a selected specific region of the touch screen upon receiving a first selection signal with respect to the specific item and a second selection signal with respect to the specific region of the touch screen.

According to a second aspect of the present invention, an electronic device includes: a touch screen configured to display a plurality of items; and a controller configured to provide a shortcut interface for accessing a specific item from among the plurality of items through a graphical user interface (GUI) that provides specific information, upon receiving a first selection signal with respect to the specific item and a second selection signal with respect to a GUI providing means corresponding to a function of providing the GUI, wherein, when the GUI providing means is selected alone, the corresponding GUI is provided.

According to a third aspect of the present invention, a method of controlling an electronic device including a touch screen includes: displaying a plurality of items on the touch screen; receiving a first selection signal with respect to a specific item from among the plurality of items and a second selection signal with respect to a specific region of the touch screen; and providing a shortcut interface for accessing the specific item to the selected specific region upon receiving the first and second selection signals.

According to a fourth aspect of the present invention, a method of controlling an electronic device including a touch screen includes: displaying a plurality of items on the touch screen; receiving a first selection signal with respect to a specific item from among the plurality of items and a second selection signal with respect to a graphical user interface (GUI) providing means corresponding to a function of providing a GUI that provides specific information; and providing a shortcut interface for accessing the specific item through the GUI upon receiving the first and second selection signals, wherein, when the GUI providing means is selected alone, the corresponding GUI is provided.

The electronic device and method of controlling the same according to the present invention have the following advantages.

According to the present invention, it is possible to provide a shortcut interface for accessing a specific item only with a simple operation of a user.

In addition, it is possible to provide the shortcut interface for accessing a specific item only to a position that the user wants.

Furthermore, it is possible to extend information and functions provided through other user interfaces by providing the shortcut interface for accessing a specific item through the other user interfaces provided by the electronic device.

### Brief description of the drawings

The accompanying drawings, which are included to provide a further understanding of the invention and are incorporated in and constitute a part of this application, illustrate embodiment(s) of the invention and together with the description serve to explain the principle of the invention.

FIG. 1 is a block diagram of a mobile terminal according to an embodiment;

FIG. 2 is a conceptual view for explaining proximity depth of a proximity sensor 141 shown in FIG. 1;

FIG. 3 is a flowchart illustrating a method of controlling an electronic device according to a first embodiment of the present invention;

FIG. 4 shows an exemplary idle screen;

FIG. 5 is a flowchart illustrating an exemplary process according to steps S110 to S130 shown in FIG. 3;

FIGS. 6 to 16 show exemplary screens implementing an embodiment of the present invention according to the process shown in FIG. 5;

FIG. 17 is a flowchart illustrating another exemplary process according to steps S110 to S130 shown in FIG. 3;

FIGS. 18 and 19 show exemplary screens implementing an embodiment of the present invention according to the process shown in FIG. 17;

FIGS. 20 to 23 are views for explaining an embodiment of providing a shortcut interface according to the present invention by controlling an indicator region 12;

FIG. 24 is a flowchart illustrating a method of controlling an electronic device according to a second embodiment of the present invention;

FIGS. 25 to 30 are views for explaining the method of controlling an electronic device according to the second embodiment of the present invention;

FIG. 31 is a flowchart illustrating a method of controlling an electronic device according to a third embodiment of the present invention; and

FIGS. 32 and 33 are views for explaining the method of controlling an electronic device according to the third embodiment of the present invention.

### Detailed description

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

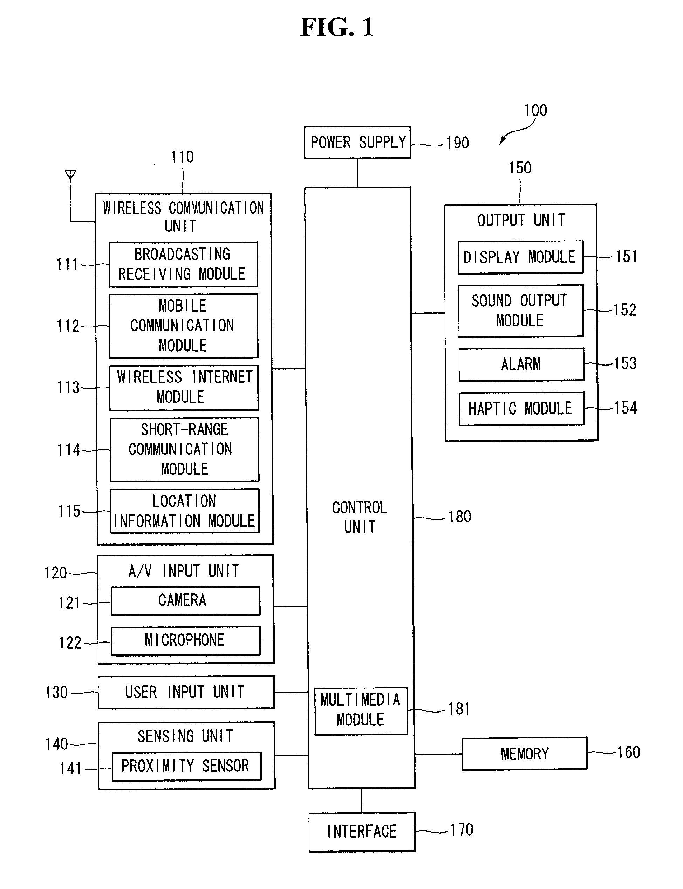

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 (of the sensing unit 140) may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

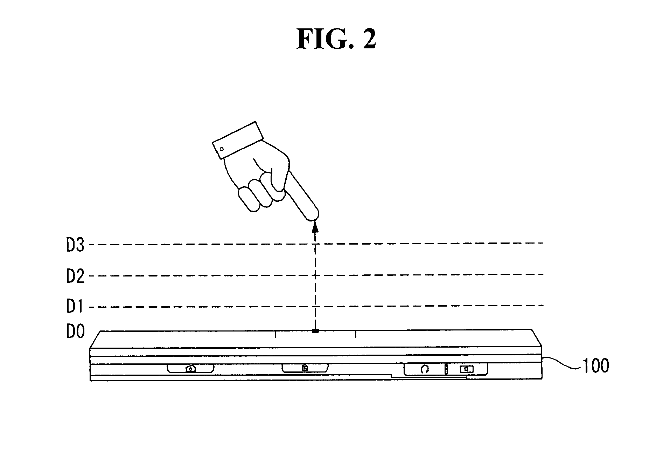

Next, FIG. 2 is a conceptual view illustrating a proximity depth of the proximity sensor 141. As shown in FIG. 2, when a pointer such as the user's finger, a pen, or the like, approaches the touch screen, the proximity sensor 141 disposed within or near the touch screen detects it and outputs a proximity signal. The proximity sensor 141 may also be configured to output a different proximity signal according to the distance (referred to as a 'proximity depth', hereinafter) between the closely touched pointer and the touch screen.

FIG. 2 also shows the section of the touch screen with the proximity sensor 141 for detecting, for example, three proximity depths. The proximity sensor 141 may detect three or less or four or more proximity depths. In more detail, when the pointer is fully brought into contact with the touch screen d0, this position is recognized as a contact touch. When the pointer is positioned to be spaced apart by shorter than a distance d1 on the touch screen, this position is recognized as a proximity touch with a first proximity depth.

If the pointer is positioned to be spaced apart by the distance longer than the distance d1 but shorter than a distance d2 on the touch screen, this position is recognized as a proximity touch with a second proximity depth. Also, if the pointer is positioned to be spaced apart by the distance longer than the distance d2 but shorter than a distance d3, this position is recognized as a proximity touch with a third proximity depth. If the pointer is positioned to be spaced apart by longer than the distance d3 on the touch screen, this position is recognized that the proximity touch has been released.

Accordingly, the controller 180 can recognize the proximity touches as various input signals according to the proximity depths and proximity positions of the pointer, and control various operations according to the various input signals.

Embodiments of the present invention will now be described.

It is assumed that the display 151 is a touch screen for convenience of description. As described above, the touch screen 151 can perform both the information display function and information input function. However, the present invention is not limited thereto. Touch described in the specification can include both contact touch and proximity touch.

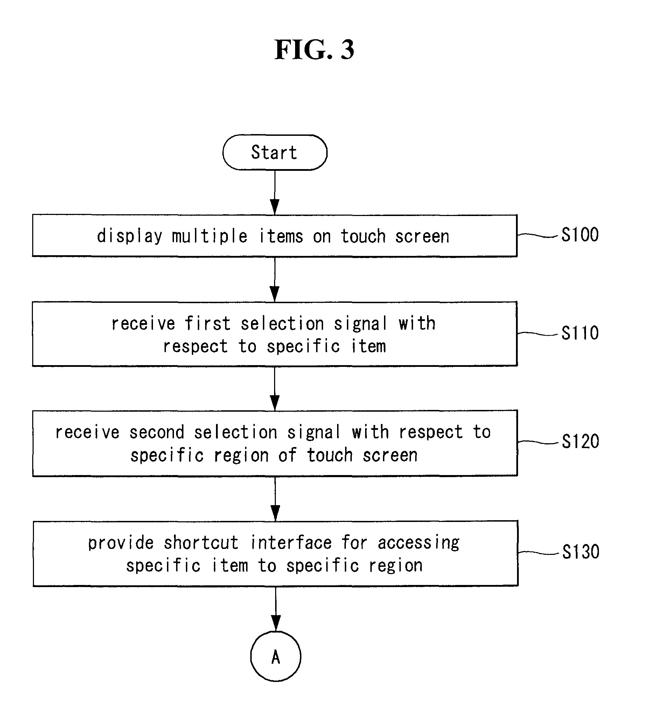

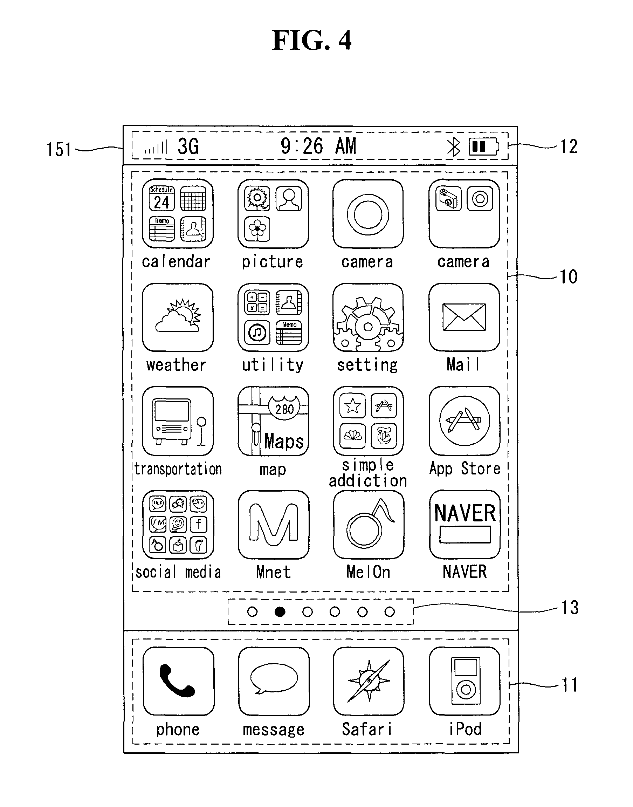

FIG. 3 is a flowchart illustrating a method of controlling an electronic device according to a first embodiment of the present invention and FIGS. 4 to 23 are views for explaining the method of controlling an electronic device according to the first embodiment of the present invention.

The method of controlling an electronic device according to the first embodiment of the present invention can be implemented in the electronic device 100 described above with reference to FIGS. 1 and 2. Accordingly, the method of controlling an electronic device according to the first embodiment of the present invention and operations of the electronic device 100 for implementing the method will be described in detail with reference to the attached drawings.

Referring to FIG. 3, the controller 180 can display a plurality of items on the touch screen 151 (S100).

FIG. 4 shows an exemplary idle screen. Referring to FIG. 4, the controller 180 can display a plurality of items 10 on the touch screen 151.

The idle screen shown in FIG. 4 may include a shortcut region 11 displaying predetermined shortcut icons in addition to the plurality of items 10.

The controller 180 may continuously display the shortcut region 11 on the touch screen 151 even when the screen provided to the touch screen 151 is changed. Otherwise, the controller 180 may not provide the shortcut region 11 to the touch screen 151 depending on the changed screen.

In addition, the controller 180 can display an indicator region 12 for providing information about the state of the electronic device 100 and/or information relating to the electronic device 100 to a predetermined position of the touch screen 151, as shown in FIG. 4.

For example, the controller 180 can provide information about the electronic device 100, such as residual battery capacity, RF communication signal intensity, current time, whether alarm is set, etc., through the indicator region 12.

The controller 180 can receive a first selection signal with respect to a specific item from among the plurality of items 10 (S110) and receive a second selection signal with respect to a specific region of the touch screen 151 (S120).

The controller 180 can provide a shortcut interface for accessing the selected item to the selected specific region upon receiving the first and second selection signals (S130).

The steps S110 and S120 may be performed in various manners. That is, the controller 180 can receive the first and second selection signals in various manners.

A description will be given of various methods through which the steps S110 and S120 are performed and various examples of carrying out the step S130 according to the steps S110 and S120.

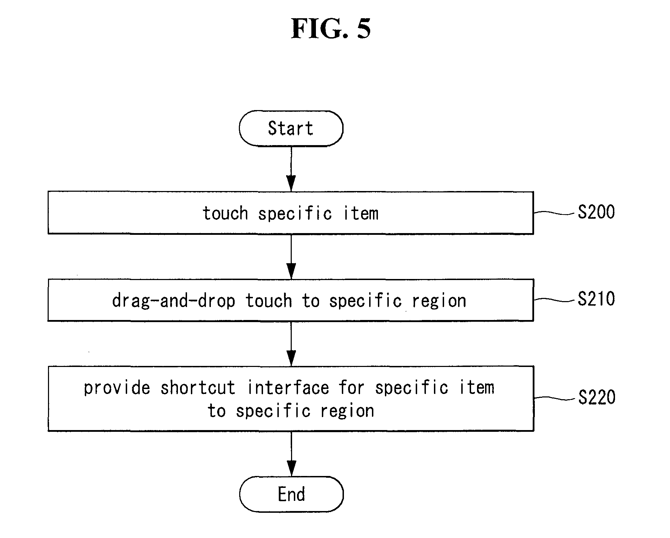

FIG. 5 is a flowchart illustrating an exemplary process according to steps S110 to S130 shown in FIG. 3 and FIGS. 6 to 16 show exemplary screens implementing an embodiment of the present invention according to the process shown in FIG. 5.

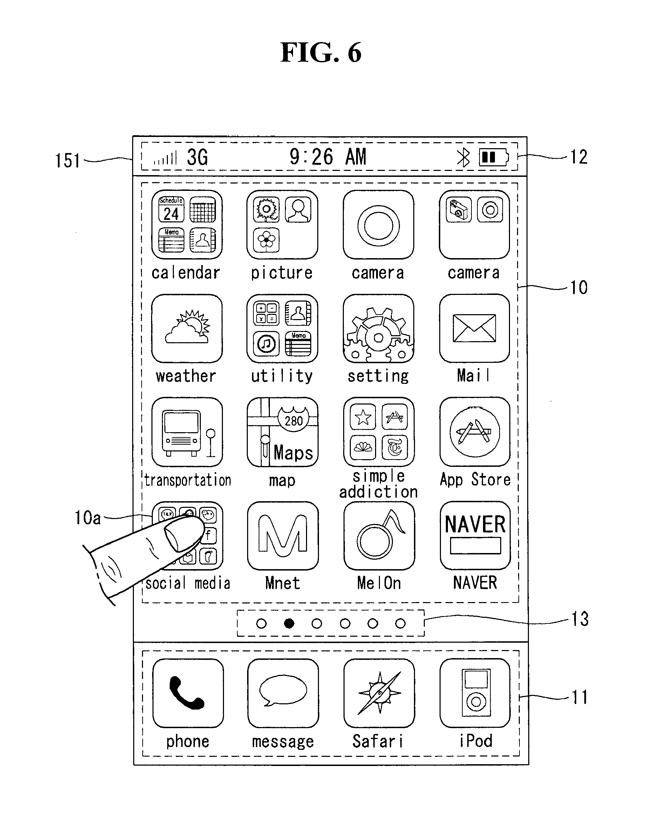

Referring to FIG. 5, the controller 180 can receive a touch signal with respect to a specific item from among the plurality of items 10 (S200). Referring to FIG. 6, a user can touch a specific item 10a from among the plurality of items with a finger.

When the user touches the specific item 10a, as shown in FIG. 6, the controller 180 can recognize the touch of the user as the first selection signal and select the specific item 10a.

The controller 180 can receive a signal corresponding to an operation of dragging-and-dropping the touch performed in step S200 to a specific region of the touch screen 151 (S210).

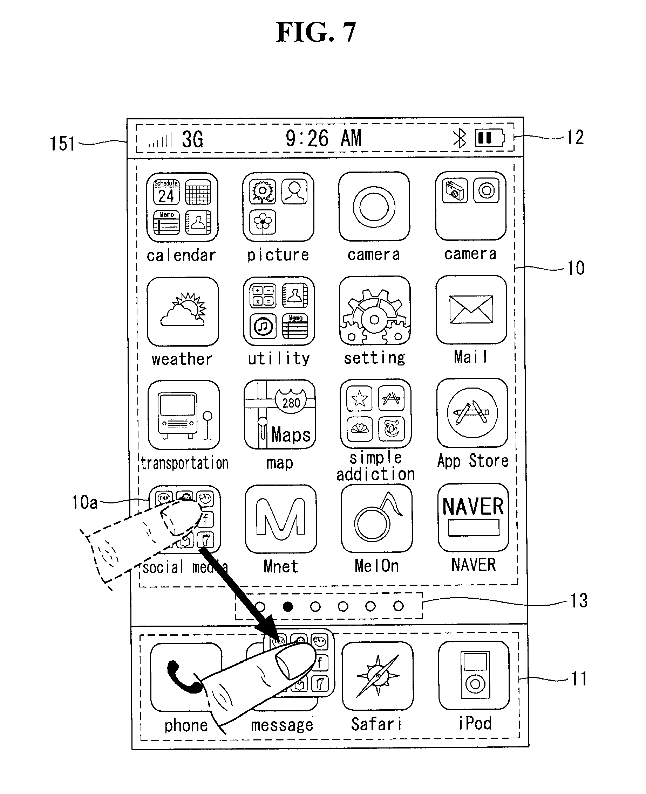

Referring to FIG. 7, the user can drag-and-drag the touch applied to the specific item 10a, performed in FIG. 6, to the shortcut region 11.

The controller 180 can recognize the drag-and-drop operation of the user, shown in FIG. 7, as the second selection signal and select the shortcut region 11 or a point at which the drag-and-drop operation of the user is ended (point at which the user releases the finger).

The controller 180 can provide the shortcut interface for accessing the specific item selected in step S200 to the specific region selected in step S210 (S220).

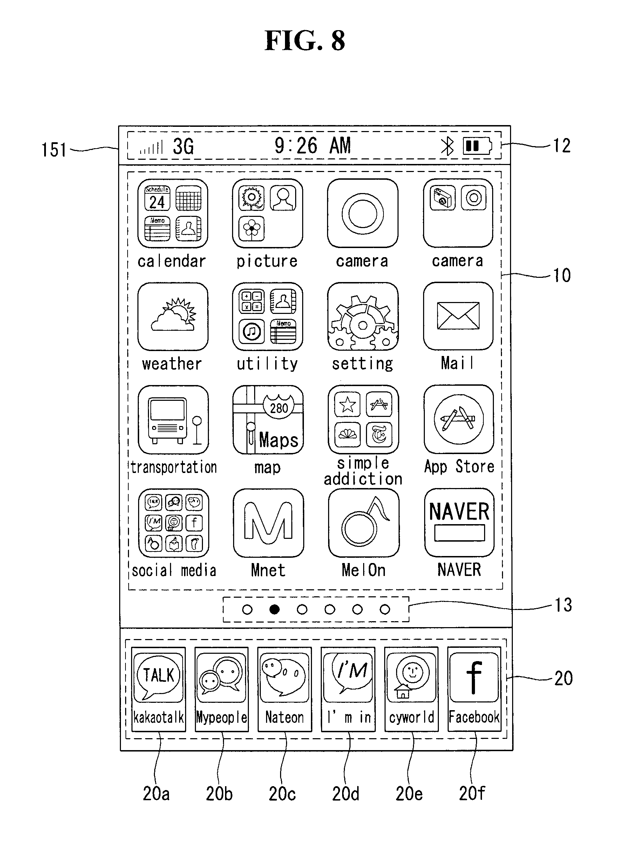

FIG. 8 shows an exemplary screen executing step S130 or S220 is performed.

Referring to FIG. 8, the controller 180 can provide a shortcut interface 20 for directly accessing the specific item 10a selected in FIG. 6 to the shortcut region 11 selected in FIG. 7.

The shortcut interface described in the specification according to the technical spirit of the present invention may include at least one icon for respectively accessing at least one sub-item relating to the specific item.

When the specific item is a folder, the at least one icon included in the shortcut interface may be an icon corresponding to an item included in the folder.

For example, the specific item 10a selected by the user in FIG. 6 is a folder "social media" including 6 icons. Accordingly, the shortcut interface 20 with respect to the specific item 10a, shown in FIG. 8, can indicate the 6 icons 20a, 20b, 20c, 20d, 20e and 20f included in the folder "social media".

When the user selects a specific icon from the 6 icons 20a, 20b, 20c, 20d, 20e and 20f, the controller 180 enters an application or a screen corresponding to the selected specific icon.

The controller 180 can provide a scroll function in the shortcut interface 20 when icons that need to be provided through the shortcut interface 20 cannot be simultaneously displayed.

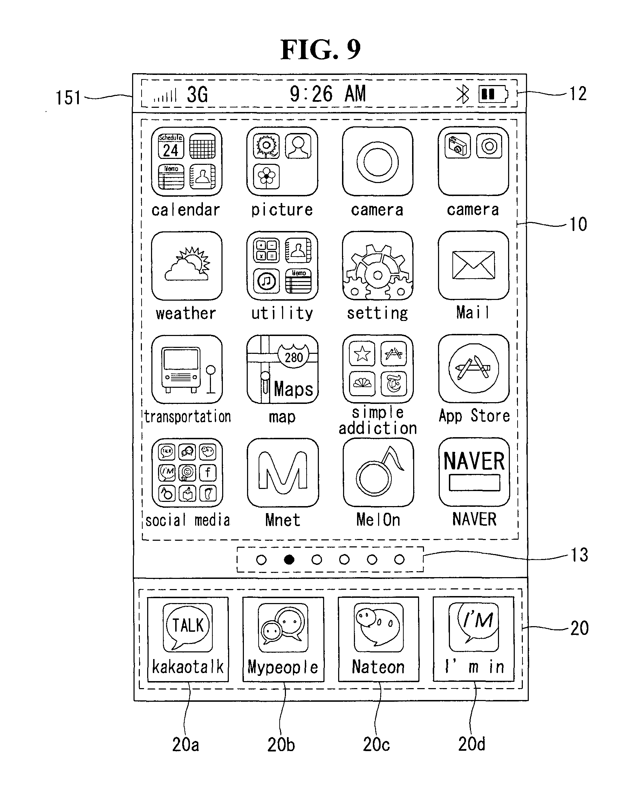

FIGS. 9 to 11 are views for explaining an example of the scroll function provided to the shortcut interface 20.

Referring to FIG. 9, when the number of icons that can be simultaneously displayed through the shortcut interface 20 is 4, the user can input a stroke through the shortcut interface 20 such that information displayed in the shortcut interface 20 is scrolled.

Referring to FIG. 9, the 4 icons 20a, 20b, 20c and 20d can be displayed in the shortcut interface 20 when the shortcut interface 20 is initially provided.

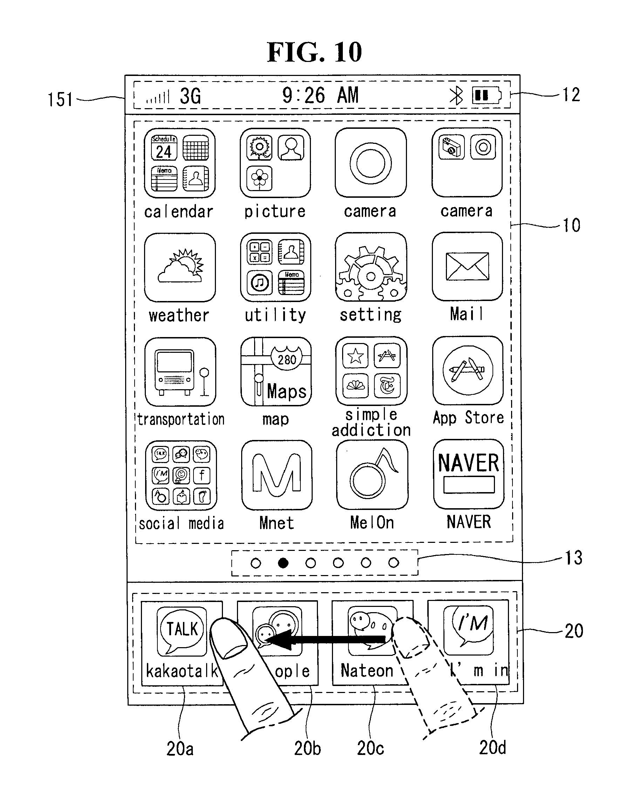

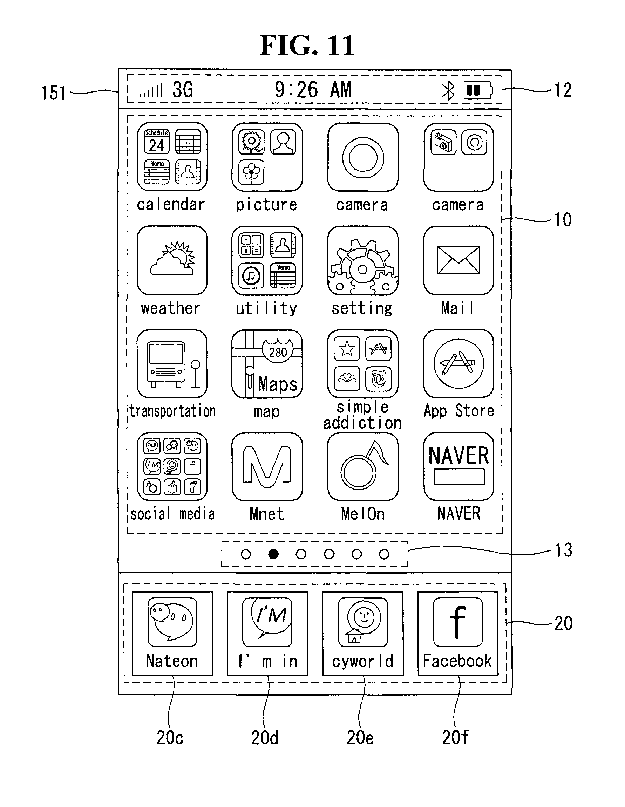

When the user applies a stroke (e.g. drag or flicking) to the shortcut interface 20 from left to right, as shown in FIG. 10, the controller 180 can scroll the icons displayed in the shortcut interface 20 to the right such that 4 icons 20c, 20d, 20e and 20f including the icons 20e and 20f which are not displayed in FIG. 9 can be displayed, as shown in FIG. 11.

When the specific item is an application, the at least one icon included in the shortcut interface may be an icon corresponding to data relating to the application.

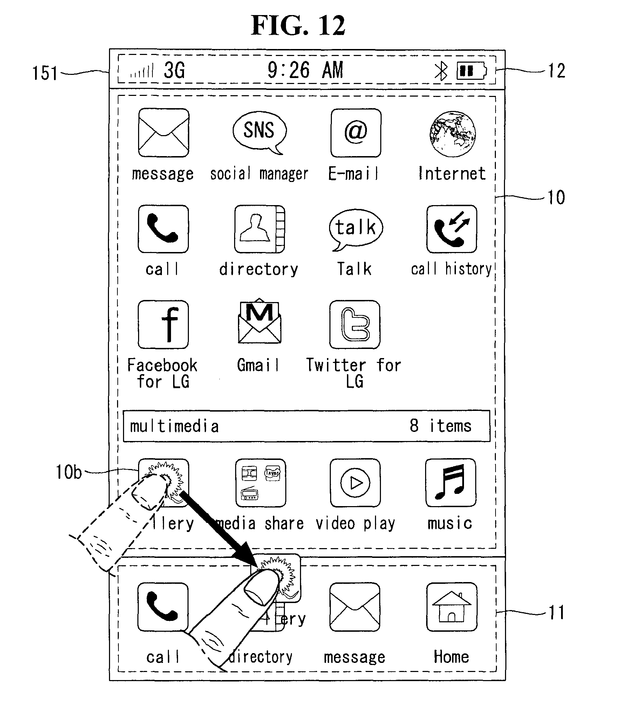

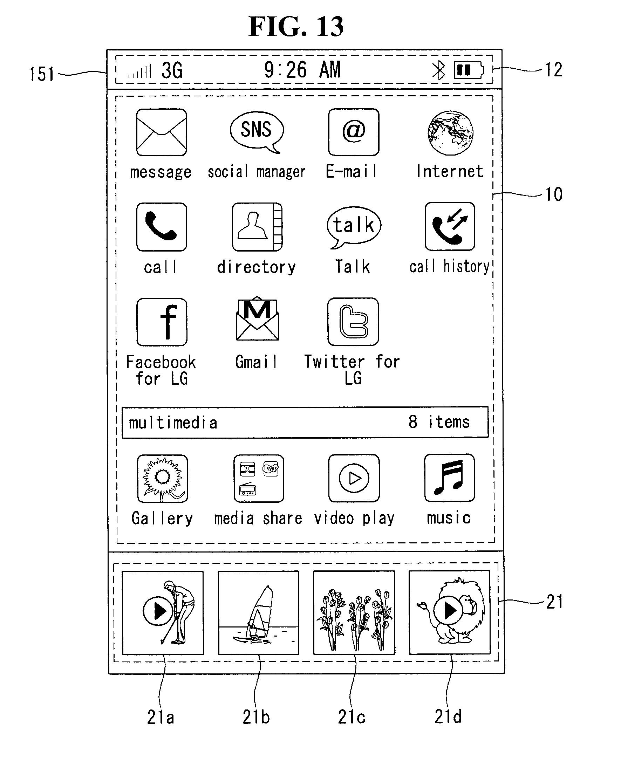

FIGS. 12 and 13 are views for explaining an example of providing the shortcut interface for directly accessing a specific application.

Referring to FIG. 12, the user can drag-and-drop a specific item 10b corresponding to "gallery" application from among the plurality of items displayed on the touch screen 151 to the shortcut region 11.

When the application "gallery" 10b is dragged-and-dropped to the shortcut region 11, the controller 180 can provide a shortcut interface 21 including still images 21b and 21c and/or moving images 21a and 21d as data played or executed by the application "gallery" 10b, as shown in FIG. 13.

When the user touches a specific one of the still images 21b and 21c with a finger, the touched still image can be displayed as a full screen. When the user touches a specific one of the moving images 21a and 21d, the touched moving image can be played.

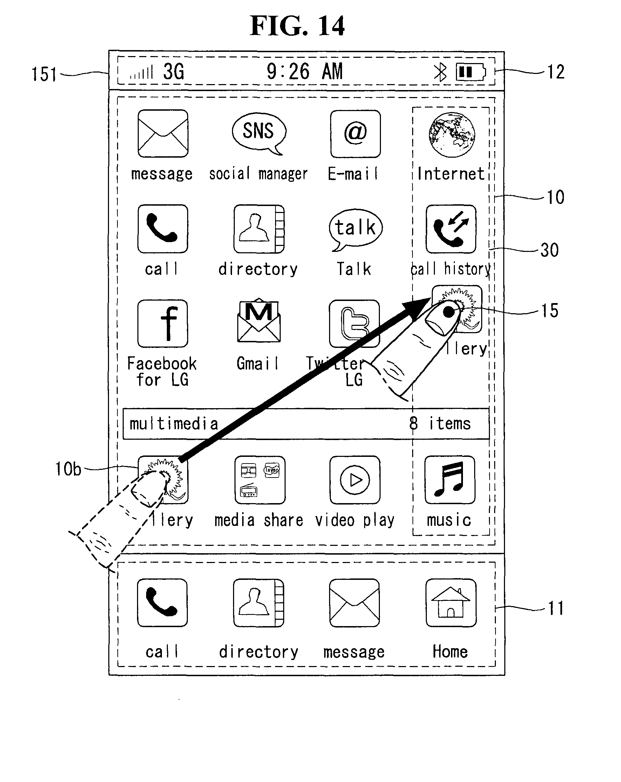

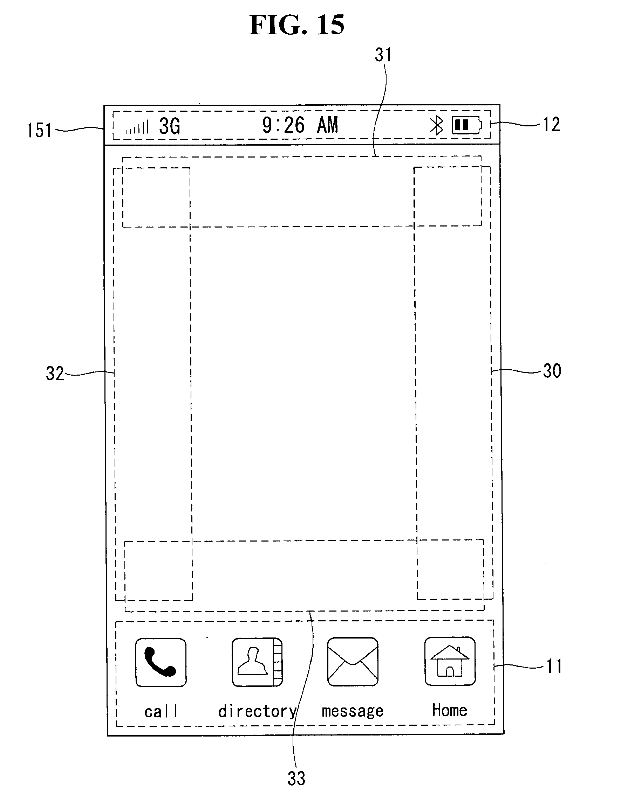

FIGS. 14 and 15 are views for explaining another example of the embodiment shown in FIG. 5.

Referring to FIG. 14, the user can touch the specific item 10b (S200), and then drag-and-drop the specific item 10b to a specific point 15 of a background screen (or idle screen) (S210). Here, the controller 180 can designate a specific region 30 that includes or is close to the specific point 15 at which the user ends the drag-and-drop operation.

The controller 180 can designate or determine the specific region 30 in various manners.

For example, the specific region 30 may be one of predetermined plurality of regions. FIG. 15 shows an example of the predetermined regions 30, 31, 32 and 33.

Since the user drags and drops the specific item 10b to the region 30 from among the predetermined plurality of regions 30, 31, 32 and 33 shown in FIG. 15, the controller 180 can designate or determine the region 30 as an area to which the shortcut interface according to the technical spirit of the present invention will be provided.

When a plurality of regions to which the shortcut interface will be provided are predetermined, as described above, if a specific item is dragged and dropped to a point that does not correspond to any of the predetermined plurality of regions, the controller 180 can designate or determine a region closest to the point to which the specific item is dragged and dropped, from among the predetermined plurality of regions, as a region to which the shortcut interface will be provided.

Alternatively, the controller 180 can designate or determine a region having the point to which the specific item is dragged and dropped as the center as an area to which the shortcut interface will be provided. In this case, the controller 180 can provide the shortcut interface to the region including the point to which the specific item is dragged and dropped.

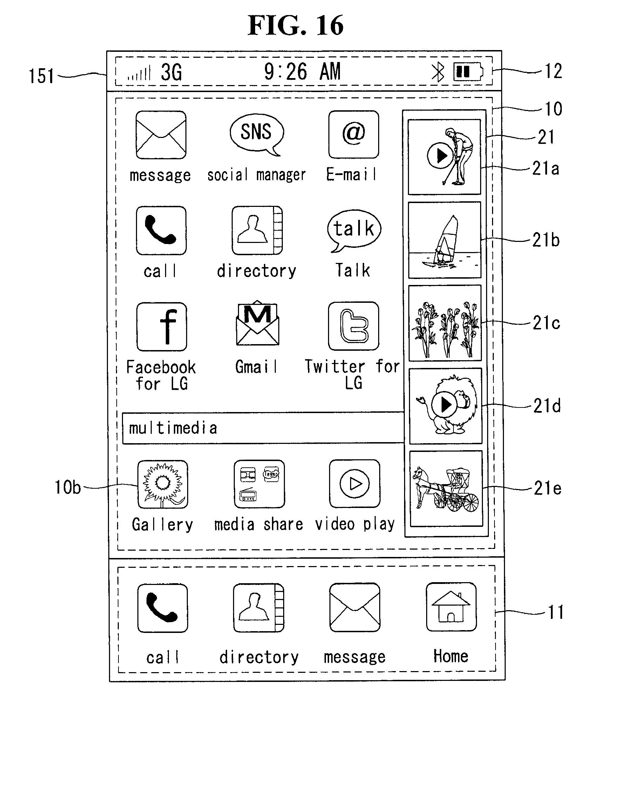

Upon execution of the drag-and-drop operation shown in FIG. 14, the controller 180 can provide the shortcut interface 21 for directly accessing the item "gallery" to the specific region 30 (S220), as shown in FIG. 16.

Compared to FIG. 13, the specific region 30 shown in FIG. 16 can display many icons (or thumbnails) 21a, 21b, 21c, 21d and 21e due to a size (length) difference between the shortcut region 11 and the specific region 30.

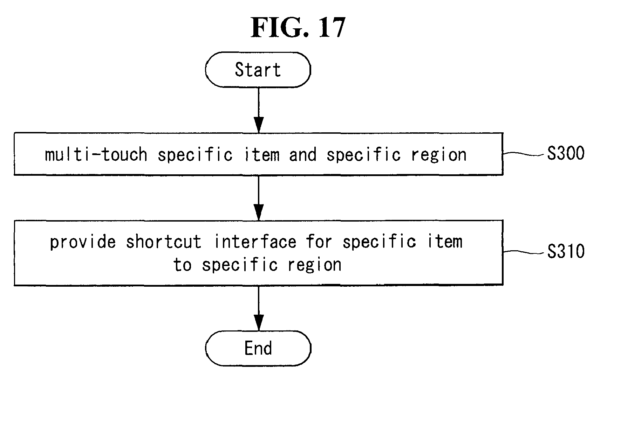

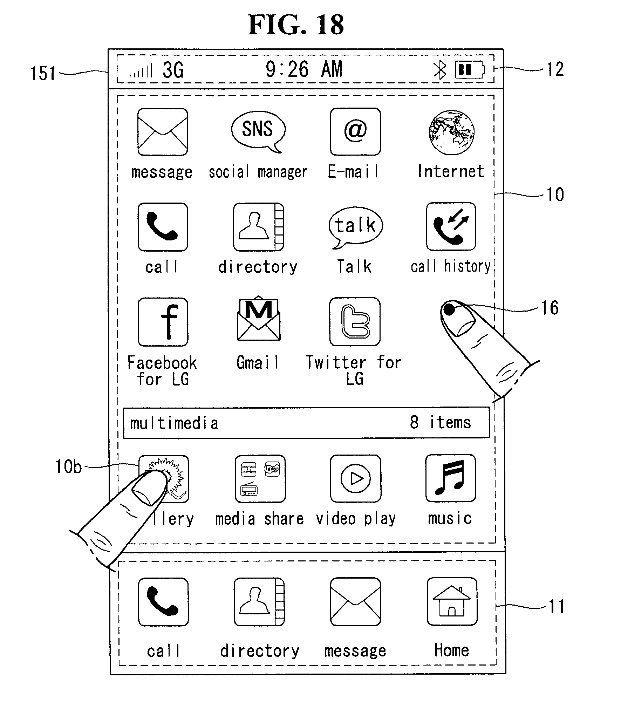

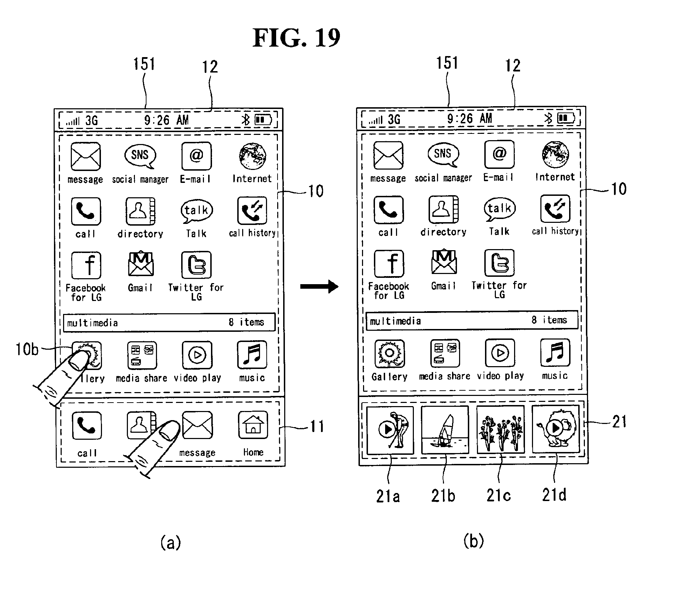

FIG. 17 is a flowchart illustrating another embodiment of the steps S110 to S120. FIGS. 18 and 19 show exemplary screens implementing the embodiment shown in FIG. 17.

Referring to FIG. 17, the controller 180 can receive multi-touch applied to a specific item from among the plurality of items 10 and a specific region (or specific point) of the touch screen 151 (S300). Referring to FIG. 18, the user can simultaneously touch the specific item 10b from among the plurality of items 10 and a specific point 16 of the touch screen 151.

The controller 180 can provide the shortcut interface with respect to the specific item 10b to a specific region that includes or is close to the specific point 16 (S310). Here, the region to which the shortcut interface is provided is determined in the same manner as the embodiment above-described with reference to FIGS. 14 to 16.

Upon the multi-touch operation performed in FIG. 18, the controller 180 can provide the shortcut interface 21 for directly accessing the specific item 10b, as shown in FIG. 16.

FIG. 19 is a view for explaining another example of the embodiment shown in FIG. 17.

Referring to FIG. 19(a), when the user multi-touches the specific item 10b and the shortcut region 11 (S300), the controller 180 can provide the shortcut interface 21 for directly accessing the specific item 10b to the shortcut region 11 (S310), as shown in FIG. 19(b).

As described above with reference to FIG. 4, the touch screen 151 can include the indicator region 12.

The interface region 12 may hide a status bar that provides information about an activated application. For example, the controller 180 can provide the status bar to the touch screen 151 when the user controls the indicator region 12 in a predetermined manner (e.g. when the user touches and drags the indicator region 12). The status bar is not provided before the user controls the indicator region 12 in the predetermined manner.

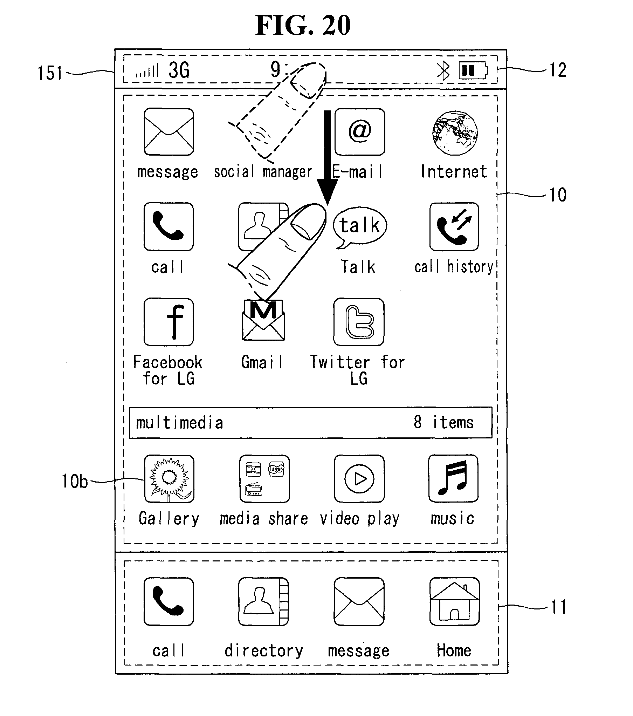

FIGS. 20 to 23 are views for explaining an embodiment of controlling the indicator region 12 to provide the shortcut interface according to the present invention.

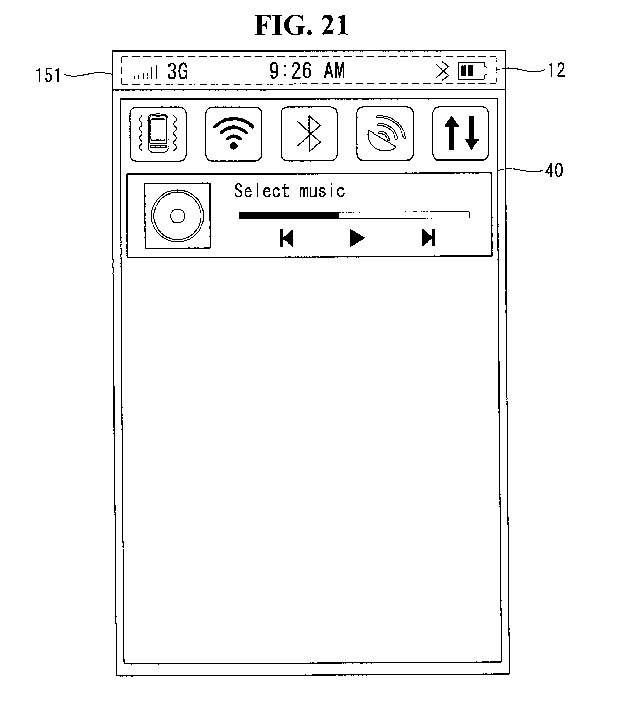

Referring to FIG. 20, the user can touch the indicator region 12 and drag the touch downward. The controller 180 can provide a graphical user interface (GUI) 40 to the touch screen 151, as shown in FIG. 21, according to the drag operation of the user, performed in FIG. 20.

The GUI 40 corresponds to the status bar providing information about an activated application.

The specific region above-mentioned with reference to FIG. 3 may be the indicator region 12. That is, step S120 shown in FIG. 3 can be performed using the indicator region 12.

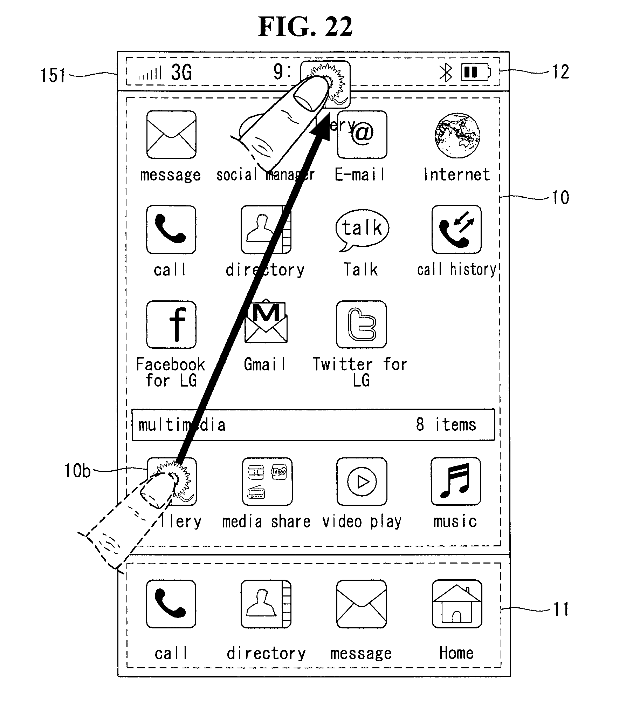

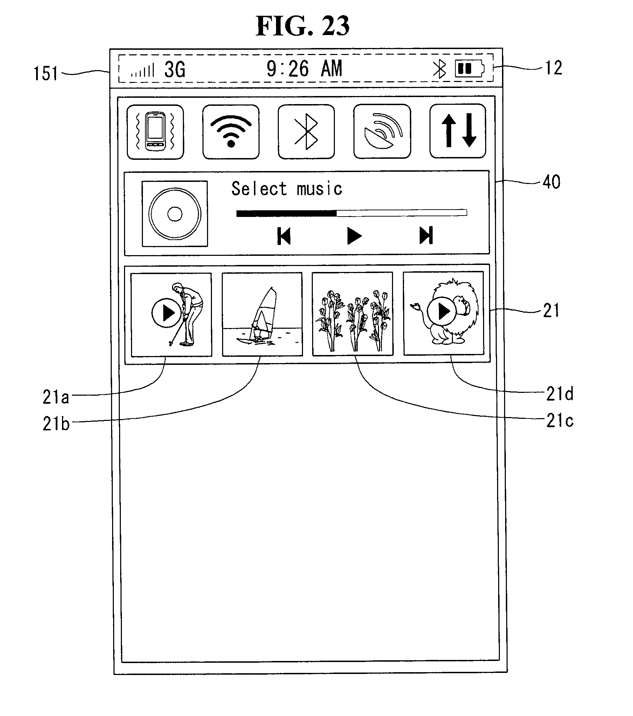

Referring to FIG. 22, when the user touches the specific item 10b corresponding to "gallery" and drags-and-drops the specific item 10b to the indicator region 12, the GUI 40 can be provided to the touch screen 151. Here, the GUI 40 can include the shortcut interface 21 for directly accessing the item "gallery", as shown in FIG. 23. The technical characteristics of the shortcut interface 21 have been described above.

When the user drags and drops the specific item 10b to the indicator region 12, as shown in FIG. 22, the GUI 40 including the shortcut interface 21 may not be directly provided.

For example, when the user drags and drops the specific item 10b to the indicator region 12, and then drags the indicator region 12 as shown in FIG. 20, the controller 180 may provide the GUI 40 including the shortcut interface 21 to the touch screen 151 as shown in FIG. 23.

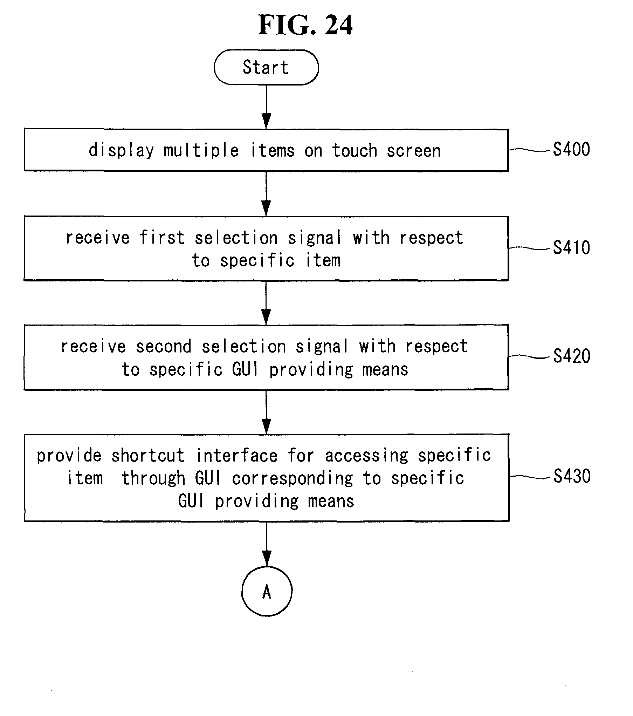

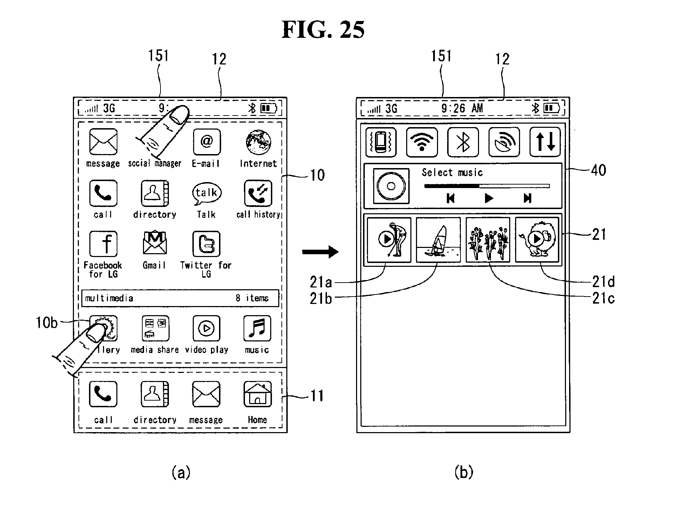

FIG. 24 is a flowchart illustrating a method of controlling an electronic device according to a second embodiment of the present invention and FIGS. 25 to 30 are views for explaining the method of controlling an electronic device according to the second embodiment of the present invention.

The method of controlling an electronic device according to the second embodiment of the present invention can be implemented in the electronic device 100 described above with reference to FIGS. 1 and 2. Accordingly, the method of controlling an electronic device according to the second embodiment of the present invention and operations of the electronic device 100 for implementing the method will be described in detail with reference to the attached drawings.

Referring to FIG. 24, the controller 180 can display a plurality of items on the touch screen 151 (S400).

For example, the controller 180 can display the plurality of items 10 such as icons on the touch screen 151, as shown in FIG. 25.

The controller 180 can receive a first selection signal with respect to a specific item from among the plurality of items 10 (S410) and receive a second selection signal with respect to a specific GUI providing means (S420).

Here, the specific GUI providing means corresponds to a function of providing a GUI that provides specific information.

For example, the specific GUI providing means may be the indicator region 12 above-described with reference to FIGS. 20 to 23 because the user can control the indicator region 12 such that the GUI 40 shown in FIGS. 21 and 23 can be provided.

The controller 180 can provide a shortcut interface for accessing the specific item selected in step S410 through the GUI corresponding to the selected specific GUI providing means (S430).

The steps S410 and S420 may be performed in various manners. For example, the steps S410 and S420 can be carried out in the same manner as those described with reference to FIGS. 5 and 17 in the first embodiment of the present invention.

Referring to FIG. 25(a), when the user simultaneously touches the specific item 10b and the indicator region 12, the controller 180 can provide the GUI 40 corresponding to the indicator region 12 to the touch screen 151 as shown in FIG. 25(b).

As shown in FIGS. 22 and 23, when the user drags and drops the specific item 10b to the indicator region 12 (refer to FIG. 22), the controller 180 can provide the GUI 40 to the touch screen 151 (refer to FIG. 23).

Here, the indicator region 12 is the GUI providing means corresponding to the function of providing the GUI 40.

As shown in FIGS. 20 and 21, the indicator region 12 as the GUI providing means can provide the GUI 40 when selected alone.

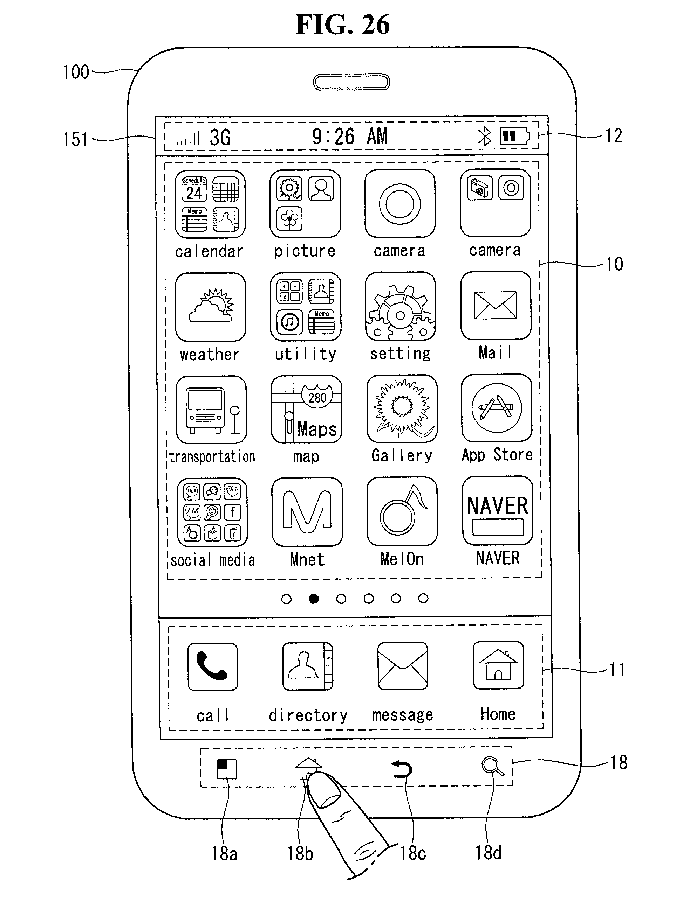

FIGS. 26 to 29 are views for explaining another example of the second embodiments of the present invention.

Referring to FIG. 26, the electronic device 100 may include a predetermined touch pad 18 arranged outside the touch screen 151. The touch pad 18 may include a plurality of touch points 18a, 18b, 18c and 18d respectively corresponding to different functions. In the following description, the plurality of touch points 18a, 18b, 18c and 18d will be called a first touch point 18a, a second touch point 18b, a third touch point 18c and a fourth touch point 18d, respectively.

For example, the third touch point 18c may correspond to a function of returning to a home screen. When the user touches the third touch point 18c, the controller 180 can switch the current screen of the touch screen 151 to the home screen.

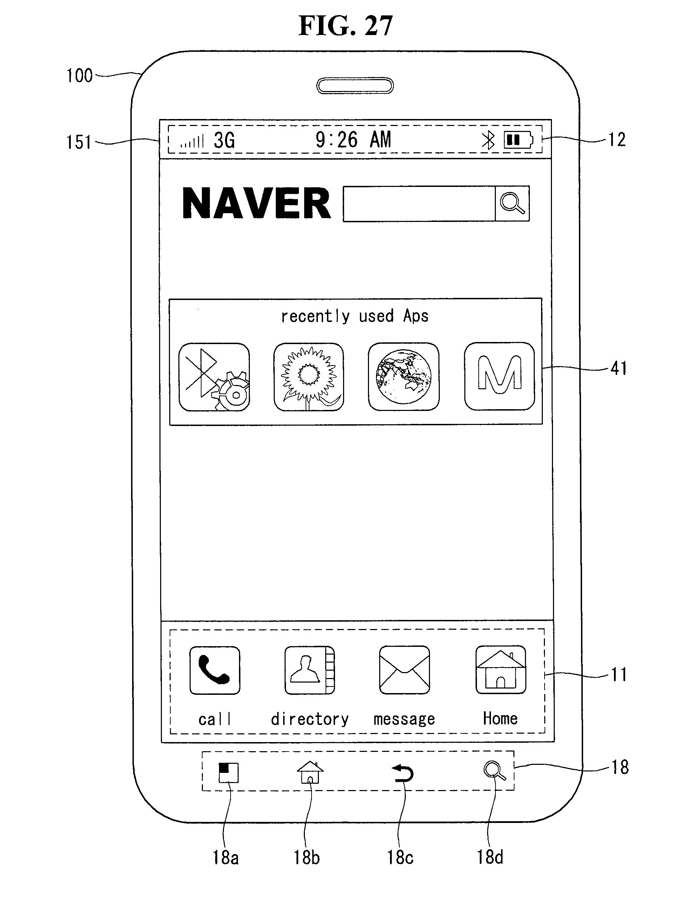

If the user long-touches the third touch point 18c for a predetermined time or longer (refer to FIG. 26), the controller 180 can provide a GUI 41 shown in FIG. 27.

That is, the third touch point 18c corresponds to the GUI providing means to which a function of providing the GUI 41 shown in FIG. 27 is matched.

For example, the GUI 41 shown in FIG. 27 is a graphical user interface for providing a list of applications recently used by the user.

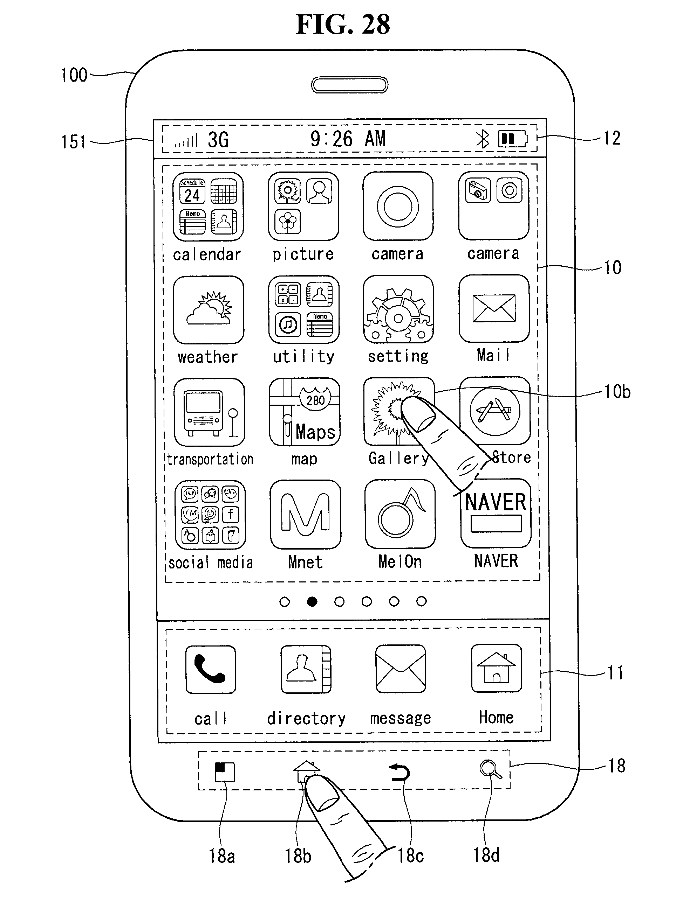

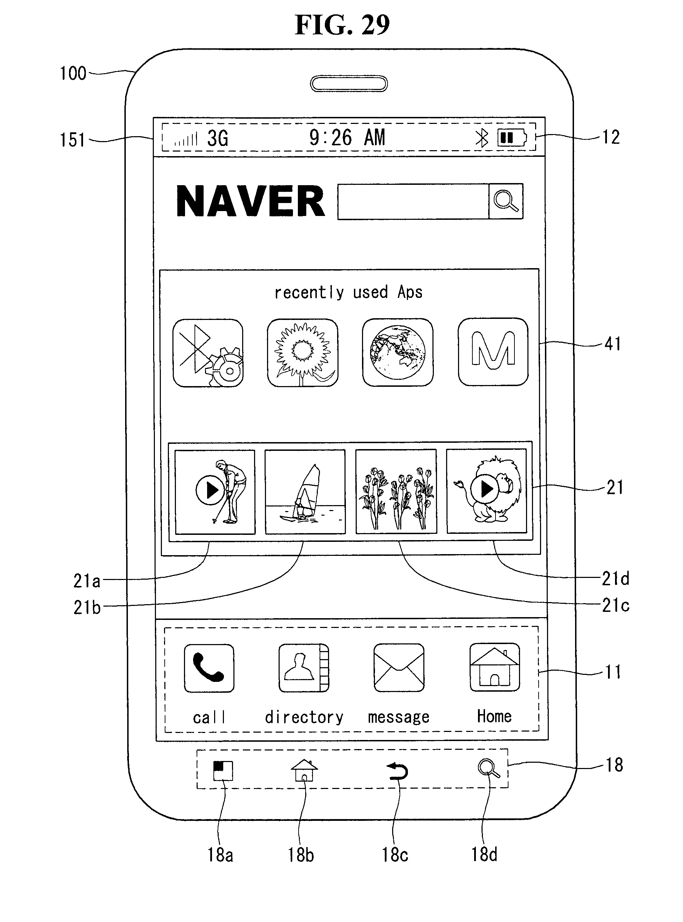

Referring to FIG. 28, when the user multi-touches the specific item 10b corresponding to "gallery" from among the plurality of items 10 and the third touch point 18c (S410 and S420), the controller 180 can provide the GUI 41 corresponding to the third touch point 18c, as shown in FIG. 29. Here, the GUI 41 can include the shortcut interface 21 for directly accessing the specific item 10b, as shown in FIG. 29.

In this case, the GUI 41 including the shortcut interface 21 may not be immediately provided according to the multi-touch operation of the user, shown in FIG. 28, similarly to the above-mentioned GUI 40 provided through the indicator region 12.

For example, the GUI 41 including the shortcut interface 21 can be provided when the user long-touches the third touch point 18c after the multi-touch operation shown in FIG. 28.

Provision of the shortcut interface with respect to a specific item by manipulating the third touch point 18c as the GUI providing means need not be performed only according to the multi-touch operation described above with reference to FIGS. 27 and 28.

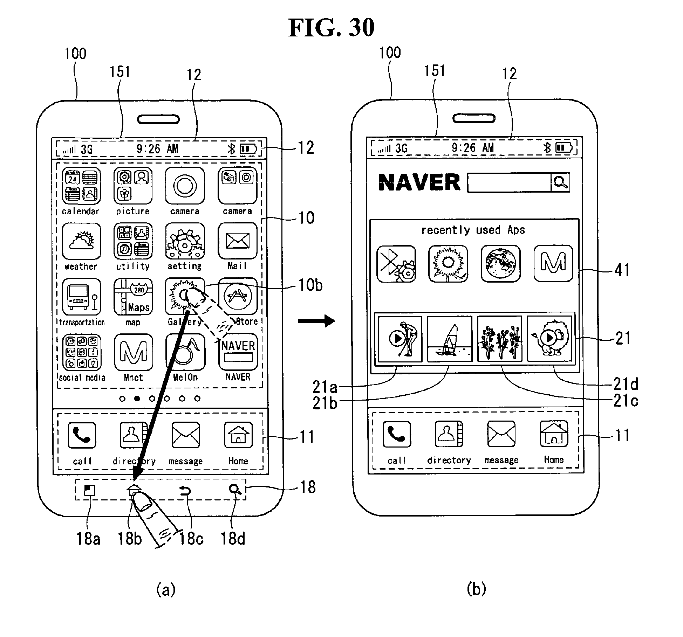

FIG. 30 shows an example of providing the shortcut interface according to the embodiments of the present invention through a drag operation.

Referring to FIG. 30(a), the user can drag the specific item 10b toward the third touch point 18c.

When the drag reaches the boundary of the touch screen 151 or the vicinity of the boundary of the touch screen 151, or when the drag is dropped to the touch point 18c beyond the boundary of the touch screen 151, the controller 180 can provide the GUI 41 including the shortcut interface 21 to the touch screen 151, as shown in FIG. 30(b).

That is, the controller 180 can recognize the touch applied to the specific item as the first selection signal in step S410 and recognize the drag or drag-and-drop of the touch to the point at which the GUI providing means is located as the second selection signal in step S420.

Furthermore, the controller 180 can recognize the touch applied to the specific item as the first selection signal in step S410, recognize selection of the GUI providing means as the second selection signal, and provide the shortcut interface when the first selection signal and the second selection signal are simultaneously received (corresponding to multi-touch) (S430).

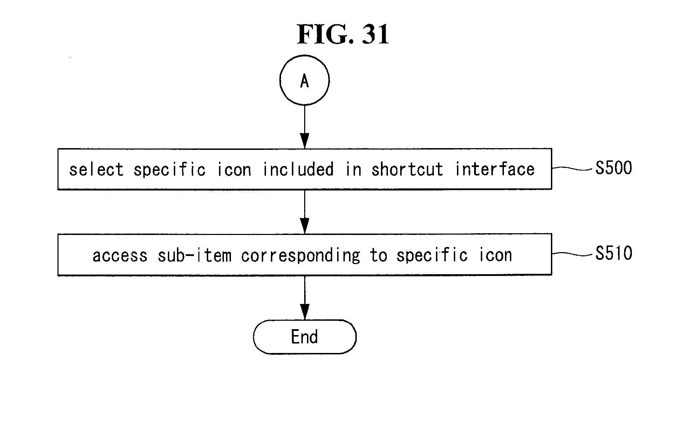

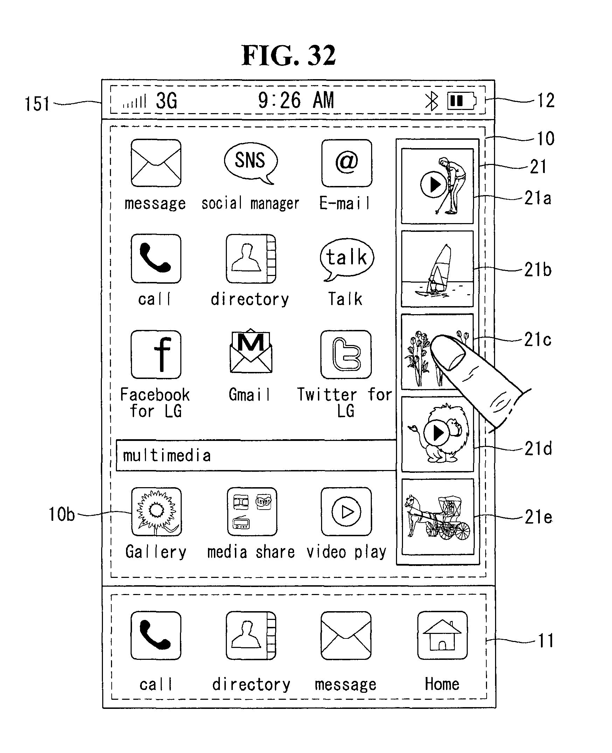

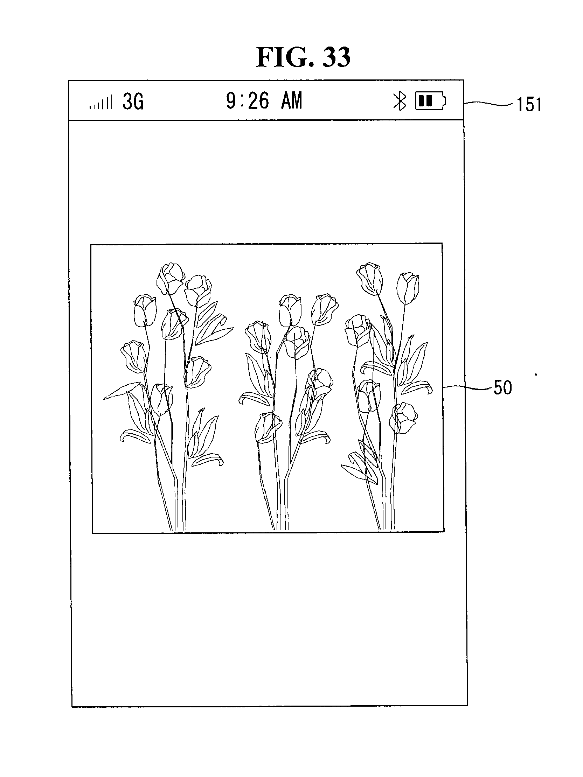

FIG. 31 is a flowchart illustrating a method of controlling an electronic device according to a third embodiment of the present invention and FIGS. 32 and 33 are views for explaining the method of controlling an electronic device according to the third embodiment of the present invention.

The method of controlling an electronic device according to the third embodiment of the present invention can be implemented in the electronic device 100 described above with reference to FIGS. 1 and 2. Accordingly, the method of controlling an electronic device according to the third embodiment of the present invention and operations of the electronic device 100 for implementing the method will be described in detail with reference to the attached drawings.

As described above, the shortcut interface according to the embodiments of the present invention can include one or more icons for accessing one or more sub-items relating to the specific item that can be directly accessed through the shortcut interface.

Referring to FIG. 31, the controller 180 can receive a selection signal with respect to a specific item from among the one or more icons included in the shortcut interface (S500).

For example, the user can select an icon (or thumbnail) 21c that represents a specific picture included in the shortcut interface 21 by touching the icon, as shown in FIG. 32.

The controller 180 can access a sub-item corresponding to the specific icon upon selection of the specific icon (S510).

Referring to FIG. 33, the controller 180 can call a picture 50 corresponding to the icon 21c and display the picture 50 on the touch screen according to the touch operation of the user, shown in FIG. 32. Here, the controller 180 can display the picture 50 by executing an application for displaying the picture 50, that is, the application corresponding to the item "gallery" 10b.

As described above, the shortcut interface 20 may include the icons 20a, 20b, 20c, 20d, 20e and 20f included in the folder "social media", as shown in FIG. 8.

In this case, when the user selects a specific item from the icons 20a, 20b, 20c, 20d, 20e and 20f (S500), the controller 180 can execute the selected specific icon so as to directly access a sub-item (application corresponding to the specific icon) corresponding to the specific icon (S510).

Furthermore, when the shortcut interface is provided to the touch screen 151 for a music folder, the shortcut interface may include icons through which a plurality of music files included in the music folder can be directly accessed.

Here, when the user selects a specific icon, the controller 180 can play music corresponding to the selected specific icon by operating an audio player.

In the meantime, the electronic device 100 can sense generation of a specific event such as reception of communication data, e.g., a call, a message or an email through a communication network while the shortcut interface according to the embodiments of the present invention is provided.

Upon generation of the specific event, the controller 180 can delete the shortcut interface currently provided to the touch screen 151.

Furthermore, the shortcut interface can be deleted from the touch screen 151 in a predetermined manner. For example, the shortcut interface can disappear from the touch screen 151 when the shortcut interface is long-touched or after a predetermined lapse of time without manipulation of the shortcut interface after the shortcut interface is provided to the touch screen.

In addition, the shortcut interface can include a plurality of icons, as described above.

Priority of the plurality of icons may be determined according to a usage pattern of the user and the icons having the determined priority can be provided to the shortcut interface. For example, an icon that is not frequently used by the user may not be included in the shortcut interface when the shortcut interface is initially displayed on the touch screen.

For example, when the shortcut interface is provided for a music folder, the shortcut interface can provide icons representing music files most frequently played by the user, from among music files included in the music folder.

The above-described method of controlling the electronic device may be written as computer programs and may be implemented in digital microprocessors that execute the programs using a computer readable recording medium. The method of controlling the electronic device may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An electronic device, comprising:
a touch screen configured to display a plurality of items; and
a controller configured to provide a shortcut interface for accessing a specific item from among the plurality of items to a selected specific region of the touch screen upon receiving a first selection signal with respect to the specific item and a second selection signal with respect to the specific region of the touch screen.

2. The electronic device of claim 1, wherein the controller recognizes a touch applied to the specific item as the first selection signal and recognizes an operation of dragging-and-dropping the touch to the specific region as the second selection signal.

3. The electronic device of claim 1, wherein the controller recognizes multi-touch applied to the specific item and the specific region as the first and second selection signals.

4. The electronic device of claim 1, wherein the specific region is a shortcut region in which predetermined shortcut icons are displayed, and the controller provides the shortcut interface to the shortcut region.

5. The electronic device of claim 1, wherein the specific region is an indicator region that hides a status bar providing information about an activated application, and the controller provides the shortcut interface to the status bar when the status bar is provided to the touch screen according to control of touch applied to the indicator region.

6. An electronic device, comprising:
a touch screen configured to display a plurality of items; and
a controller configured to provide a shortcut interface for accessing a specific item from among the plurality of items through a graphical user interface (GUI) that provides specific information, upon receiving a first selection signal with respect to the specific item and a second selection signal with respect to a GUI providing means corresponding to a function of providing the GUI,
wherein, when the GUI providing means is selected alone, the corresponding GUI is provided.

7. The electronic device of claim 6, wherein the GUI providing means is a touch pad or a key which is provided through a specific region of the touch screen or provided to the outside of the touch screen.

8. The electronic device of claim 7, wherein the controller recognizes a touch applied to the specific item as the first selection signal and recognizes an operation of dragging or dragging-and-dropping the touch to a point where the GUI providing means is located as the second selection signal.

9. The electronic device of claim 7, wherein the controller recognizes a touch applied to the specific item as the first selection signal, recognizes selection of the GUI providing means as the second selection signal, and provides the shortcut interface when the first and second selection signals are simultaneously received.

10. The electronic device of claim 1 or 6, wherein the shortcut interface includes at least one icon for respectively accessing at least one sub-item related to the specific item.

11. The electronic device of claim 10 wherein the at least one icon corresponds to an item included in a folder when the specific item is the folder or corresponds to data relating to an application when the specific item is the application.

12. A method of controlling an electronic device including a touch screen, the method comprising:
displaying a plurality of items on the touch screen;
receiving a first selection signal with respect to a specific item from among the plurality of items and a second selection signal with respect to a specific region of the touch screen; and
providing a shortcut interface for accessing the specific item to the selected specific region upon receiving the first and second selection signals.

13. The method of claim 12, wherein the receiving of the first and second selection signals comprises: one of recognizing a touch applied to the specific item as the first selection signal and recognizing an operation of dragging-and-dropping the touch to the specific region as the second selection signal; and recognizes multi-touch applied to the specific item and the specific region as the first and second selection signals.

14. The method of claim 12, wherein the specific region includes at least one of a shortcut region in which predetermined shortcut icons are displayed and an indicator region that hides a status bar providing information about an activated application.

15. A method of controlling an electronic device including a touch screen, the method comprising:
displaying a plurality of items on the touch screen;
receiving a first selection signal with respect to a specific item from among the plurality of items and a second selection signal with respect to a graphical user interface (GUI) providing means corresponding to a function of providing a GUI that provides specific information; and
providing a shortcut interface for accessing the specific item through the GUI upon receiving the first and second selection signals,
wherein, when the GUI providing means is selected alone, the corresponding GUI is provided.
